(19) Europäisches Patentamt

European Patent Office

Office européen des brevets

(11) **EP 2 398 177 B1**

(12) **EUROPEAN PATENT SPECIFICATION**

(45) Date of publication and mention
of the grant of the patent:
**20.03.2013 Bulletin 2013/12**

(51) Int Cl.:
***H04L 1/00*** (2006.01)

(21) Application number: **10360028.4**

(22) Date of filing: **21.06.2010**

(54) **Radio interface common reconfiguration**

Gemeinsame Rekonfigurierung einer Funkschnittstelle

Reconfiguration commune d'interface radio

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**21.12.2011 Bulletin 2011/51**

(73) Proprietor: **Alcatel Lucent
75007 Paris (FR)**

(72) Inventor: **Shin, Horng Wong
Chippenham
Wiltshire, SN14 0SP (GB)**

(74) Representative: **Sarup, David Alexander et al
Alcatel-Lucent Telecom Limited
Unit 18, Core 3
Workzone, Innova Business Park
Electric Avenue
Enfield EN3 7XU (GB)**

(56) References cited:
**EP-A2- 2 151 943        GB-A- 2 116 403
US-A- 6 157 622        US-A1- 2008 267 061
US-A1- 2010 112 974**

**Description**

FIELD OF THE INVENTION

The present invention relates to a method of requesting a radio interface common reconfiguration, a base station, a method of performing a radio interface common reconfiguration, user equipment and computer program products.

BACKGROUND

Single carrier wireless telecommunications systems are known. In those known systems, radio coverage is provided to user equipment, for example mobile telephones, by geographical area. A base station is located in each geographical area to provide the required radio coverage. User equipment in the area served by a base station receives information and data from the base station and transmits information and data to the base station. In a High-Speed Downlink Packet Access (HSDPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless telecommunications systems operating in a single carrier mode, user equipment can move between geographical base station coverage areas. Service provided to user equipment is overseen by a Radio Network Controller (RNC). The RNC communicates with user equipment and base stations and determines which base station each user equipment is primarily connected to. Furthermore, the RNC acts to control and communicate with a base station and user equipment when user equipment moves from the geographical area served by one base station to a geographical area served by another base station.

It has been proposed to allow base stations and user equipment to each transmit simultaneously on more than one carrier. Furthermore, it has been proposed to allow user equipment and base stations to receive simultaneously on more than one carrier. Each carrier, both uplink and downlink, is typically independently power controlled by a base station. Provision of more than one downlink carrier, for example on four frequency carriers, allows for an increase in data throughput to the user equipment. Networks having more than two carriers may be referred to as "Multi Cell High-Speed Downlink Packet Access" (MC-HSDPA) networks. The term "multi-carrier" network used herein is envisaged to cover the case where two (e.g. Dual Cell HSDPA and Dual cell HSUPA), three, four or more downlink (or uplink) carriers are provided for in a network.

EP 2 151 943 A2 discloses a HARQ signal transmission method. Uplink resources are allocated by means of on uplink transmission resource assignment message which is received by user equipment. The uplink transmission resource assignment message includes a modulation and coding scheme MCS (see paragraph 0013) as well as a new data indicator.

US 2010/0112974 discloses a method of controlling a receiver. A group identifier or modulation encoding scheme is sent in a physical layer header. This group identifier or modulation and coding scheme, or both, determine whether the corresponding physical layer frame should be fully demodulated and decoded. If it is not necessary to fully demodulate and decode the physical layer frame, the receiver may disable its demodulator, decoder, or both. This results in power savings.

US 2008/0267061 discloses handling cell re-selections and transitions to and from an enhanced cell FACH state.

The provision of multi-carrier functionality may have associated problems. Accordingly, it is desired to improve the operation of a wireless telecommunications network having multi-carrier functionality.

SUMMARY

According to a first aspect, there is provided a method of requesting a radio interface common reconfiguration to be made by each of a group of user equipment from within a plurality of user equipment being supported by a base station in a multi-carrier wireless communications system, the method comprising the steps of: determining the radio interface common reconfiguration to be made by each of the group of user equipment; encoding the radio interface common reconfiguration in a payload field of a high speed shared control channel (HS-SCCH) order; encoding, in the HS-SCCH order, an indication associating the HS-SCCH order with the group of user equipment; and transmitting the HS-SCCH order to the plurality of user equipment being supported by the base station.

The first aspect recognises that one problem with existing multi-carrier functionality is that should it be necessary to reconfigure the radio interface between user equipment and a base station to, for example, save energy, reduce interference or for other reasons, this can only be done by sending a message to each of the user equipment in turn, requesting that they reconfigure their radio interface, It will be appreciated that sending such a message to each user equipment in turn takes time and consumes resources. This may lead to reduced opportunities to take advantage of any benefits that such a reconfiguration may offer.

Accordingly, a determination may be made of a required radio interface reconfiguration that is common to a group of user equipment being supported by a base station. The group of user equipment may be a subset of all the user equipment being supported by the base station. The reconfiguration may be the same reconfiguration to be performed by all the user equipment in that group. Details of the reconfiguration may then be encoded in an HS-SCCH order in, for example, a payload field. Accordingly, the payload field may provide an indication of the radio interface reconfiguration required to be implemented by each user equipment within the group. It will be appreciated that any appropriate encoding technique may be utilised to encode the reconfiguration to be performed by the group of user equipment. An indication may also be encoded in the HS-SCCH order which associates that order with a predetermined group of user equipment. It will be appreciated that this indication helps to differentiate the HS-SCCH order intended for a group of user equipment from existing HS-SCCH orders intended for individual user equipment. The indication may also indicate which of the groups of user equipment the HS-SCCH order is intended for. The HS-SCCH order may then be transmitted to the plurality of user equipment being supported by the base station.

Hence, it can be seen that a single HS-SCCH order can be transmitted to a group of user equipment. This avoids the need to transmit individual messages to each of those user equipment. The HS-SCCH order may identify which group of user equipment the message is intended for, thus enabling user equipment not within that group to disregard the message. However, those user equipment within the group may then perform the requested radio interface changes which will then be implemented in common across all user equipment within that group. That is to say that every user equipment within the group will implement the requested change. Hence, a single message can be sent to a group of user equipment to cause that group of user equipment to make a common reconfiguration of their radio interface which reduces the amount of time taken to perform the reconfiguration and minimises the amount of resources utilised to effect the reconfiguration.

In one embodiment, the group of user equipment are in a cell dedicated channel (Cell_DCH) state and the radio interface common reconfiguration comprises at least one of activating at least one carrier, deactivating at least one carrier, changing primary carrier, changing of serving cell, change between normal transmission and discontinuous transmission, and change between normal reception and discontinuous reception. Accordingly, the user equipment may be operating in the CELL_DCH state in which a high throughput is required and so rapid changes to the radio interface to support that high throughput may also be required. For groups of user equipment in the CELL_DCH state it may be possible to activate or deactivate carriers, change the primary carrier, change the serving cell, switch to and from discontinuous transmission or reception, or perform other reconfigurations of the radio interface. In this way, it can be seen that it is possible to deactivate or activate aspects of a large group of user equipment very rapidly. For example, a base station can deactivate a particular secondary carrier for a group or all groups of user equipment for the purposes of interference control or energy saving. In the case of energy saving, the base station may, as a result of low traffic, wish to turn off one of its carriers and therefore deactivate secondary carriers for a group or all groups of user equipment.

In one embodiment, the step of encoding the indication comprises: appending a modified cyclic redundancy check field to the HS-SCCH order, the modified cyclic redundancy check field being derived from at least one field of the HS-SCCH order and an identifier common to the group of user equipment. Accordingly, a modified cyclic redundancy check field may be appended to the HS-SCCH order. This modified cyclic redundancy check field may be calculated using an identifier which is common to all user equipment within a group. In embodiments, such a common identifier may be a secondary High-speed downlink shared channel Radio Network Transaction Identifier (H-RNTI) which is pre-allocated by the base station to the user equipment. Such pre-allocation may be performed by the base station for other purposes or may be signalled to the user equipment for this specific purpose. It will be appreciated that the specific signalling of such secondary H-RNTIs provides the base station with more control in assigning those common identifiers. Accordingly, it can be seen that by modifying the cyclic redundancy check field with the identifier common to the user equipment within a particular group, only those user equipment within that group who possess that identifier will be able to perform a valid cyclic redundancy check and therefore implement the requested reconfiguration. Typically, each user equipment may initially attempt to perform the cyclic redundancy check using its unique identifier and, if that fails, may attempt to perform the cyclic redundancy check using its common identifier. All user equipment belonging to other groups will assume that either the message is not intended for that user equipment or will assume that the message is corrupt. In either event, all other user equipment will not implement the requested reconfiguration.

In one embodiment, the step of encoding the indication comprises: appending a modified header field to the HS-SCCH order, the modified header field encoding an identifier common to the group of user equipment. Accordingly, the header field of the HS-SCCH order may be modified to encode the identifier common to the group of user equipment. In other words, the modified header may indicate that the order is a multi-cast order intended for a group of user equipment. The user equipment may then, in turn, apply modified processing to such a multi-cast order to determine whether the message is intended for that user equipment. Hence, when the user equipment receives the HS-SCCH order with the modified header, only those user equipment having a secondary H-RNTI indicated by the header will attempt to decode the message. All other user equipment will disregard the message. It will be appreciated that the header may encode the H-RNTI itself or may encode an indicator which indicates, typically in a fewer number of bits, the group identifier of the group the user equipment belongs to/. It will be appreciated that both the base station and user equipment will be operable to derive the group identifier from the secondary H-RNTI.

In one embodiment, the step of encoding the indication comprises: appending a modified header field to the HS-SCCH order, the modified header field encoding an indicator that the HS-SCCH order is intended for a group of user equipment. Accordingly, the modified header may indicate that the HS-SCCH order is a modified order intended for a group of user equipment.

In one embodiment, the step of encoding the indication comprises: appending a modified header field to the HS-SCCH order, the modified header field encoding a group indicator representative of an identifier common to the group of user equipment.

In one embodiment, the method comprises the steps of: determining a quantity of user equipment being supported by the base station requiring the radio interface common reconfiguration and encoding and transmitting a plurality of the HS-SCCH orders, each of the plurality of the HS-SCCH orders being receivable by an associated group of user equipment have a size less than a predetermined maximum. A problem with transmitting HS-SCCH orders to a group of user equipment is that each of those user equipment will respond with an acknowledgement that the common reconfiguration has occurred, and these acknowledgement messages may overwhelm the base station. In order to reduce the number of such acknowledgements being transmitted at any one time a number of HS-SCCH orders are transmitted to suitably sized groups. Accordingly, the number of user equipment for which the reconfiguration is required to be made is determined. If the number of user equipment to be reconfigured is greater than a predetermined threshold, then a number of HS-SCCH orders may be encoded and transmitted, each of which affecting a number of user equipment less than the threshold. In this way, the number of acknowledgement messages received can be restricted to less than a predetermined amount in order to reduce load on the network and the base station.

In one embodiment, the step of transmitting comprises transmitting at least one of the plurality of the HS-SCCH orders at a time which is different from at least another of the plurality of the HS-SCCH orders. Hence, by transmitting the HS-SCCH orders at different times, the acknowledgement messages will likewise be more distributed, thus reducing the peak load on the network and the base station.

In one embodiment, the step of transmitting comprises: at least one of transmitting the HS-SCCH order with a power level set for that user equipment within the group having a lowest signal reception level and transmitting the HS-SCCH order on a plurality of carriers. Accordingly, by transmitting the HS-SCCH order with a power level set for the user equipment having the greatest degree of signal attenuation, it can be ensured that the HS-SCCH order is received by that user equipment and by all other user equipment within the group. Likewise, by transmitting the HS-SCCH order on each of the carriers, the likelihood that the order is received by each user equipment is increased. Also, in embodiments, the order transmitted on the different carriers may be soft combined by the user equipment.

In one embodiment, the method comprises the step of: monitoring for acknowledgement messages from each of the group of user equipment; and at least one of retransmitting the HS-SCCH order and transmitting at least one HS-SCCH order, each HS-SCCH order being encoded for one of the group of user equipment which failed to transmit an acknowledgement message. Accordingly, the base station may monitor for acknowledgement messages received from each user equipment indicating that the requested reconfiguration has been received. After a predetermined period, the base station may then determine whether to re-transmit the HS-SCCH order to the group of user equipment or transmit individual messages to those user equipment which have failed to acknowledge the previous HS-SCCH order.

According to a second aspect, there is provided a base station operable to request a radio interface common reconfiguration to be made by each of a group of user equipment from within a plurality of user equipment being supported by the base station, the base station comprising: determination logic operable to determine the radio interface common reconfiguration to be made by each of the group of user equipment; encoding logic operable to encode the radio interface common reconfiguration in a payload field of a HS-SCCH order and to encode, in the HS-SCCH order, an indication associating the HS-SCCH order with the group of user equipment; and transmission logic operable to transmit the HS-SCCH order to the plurality of user equipment being supported by the base station.

In one embodiment, the group of user equipment are in a cell dedicated channel (Cell_DCH) state and the radio interface common reconfiguration comprises at least one of activating at least one carrier, deactivating at least one carrier, changing primary carrier, changing of serving cell, change between normal transmission and discontinuous transmission, and change between normal reception and discontinuous reception.

In one embodiment, the encoding logic is operable to append a modified cyclic redundancy check field to the HS-SCCH order, the modified cyclic redundancy check field being derived from at least one field of the HS-SCCH order and an identifier common to the group of user equipment.

In one embodiment, the encoding logic is operable to append a modified header field to the HS-SCCH order, the modified header field encoding an identifier common to the group of user equipment.

In one embodiment, the encoding logic is operable to append a modified header field to the HS-SCCH order, the modified header field encoding an indicator that the HS-SCCH order is intended for a group of user equipment.

In one embodiment, the encoding logic is operable to append a modified header field to the HS-SCCH order, the modified header field encoding a group indicator representative of an identifier common to the group of user equipment.

In one embodiment, the determining logic is operable to determine a quantity of user equipment being supported by the base station requiring the radio interface common reconfiguration and the encoding logic and transmission logic are operable to encode and transmit a plurality of the HS-SCCH orders, each of the plurality of the HS-SCCH orders being receivable by an associated group of user equipment have a size less than a predetermined maximum.

In one embodiment, the transmission logic is operable to perform at least one of transmitting the HS-SCCH order with a power level set for that user equipment within the group having a lowest signal reception level and transmitting the HS-SCCH order on a plurality of carriers.

In one embodiment, the transmission logic is operable to transmit at least one of the plurality of the HS-SCCH orders at a time which is different from at least another of the plurality of the HS-SCCH orders.

In one embodiment, base station comprises monitoring logic operable to monitor for acknowledgement messages from each of the group of user equipment and the encoding logic and transmission logic are operable to perform at least one of retransmitting the HS-SCCH order and transmitting a plurality of HS-SCCH orders, each of the plurality of HS-SCCH orders being encoded for one of the group of user equipment which failed to transmit an acknowledgement message.

According to a third aspect, there is provided a method of performing a radio interface common reconfiguration in user equipment in response to a request from a supporting base station, the method comprising the steps of: receiving an HS-SCCH order from the base station; decoding an indication in the HS-SCCH order associating the HS-SCCH order with a group of user equipment; determining whether the indication matches a group with which the user equipment is associated; and if a match occurs, decoding the radio interface common reconfiguration in the HS-SCCH order and performing the radio interface common reconfiguration.

In one embodiment, the user equipment is in a cell dedicated channel (Cell_DCH) state and the radio interface common reconfiguration comprises at least one of activating at least one carrier, deactivating at least one carrier, changing primary carrier, changing of serving cell, change between normal transmission and discontinuous transmission, and change between normal reception and discontinuous reception.

In one embodiment, the step of decoding and determining comprises extracting a cyclic redundancy check field from the HS-SCCH order and performing a cyclic redundancy check using an identifier common to the group of user equipment. Accordingly, if the normal cyclic redundancy check on the received HS-SCCH order performed by the user equipment using its unique H-RNTI fails, the user equipment may then perform the cyclic redundancy check using the common identifier. Should the cyclic redundancy check using the common identifier then prove positive, the user equipment may then implement the requested reconfiguration.

In one embodiment, the step of decoding and determining comprises identifying the indication in a header field of the HS-SCCH order indicating a group of user equipment with which the HS-SCCH order is associated. Hence, the determination that the HS-SCCH order is associated with a group of user equipment may be determined directly from the header field.

In one embodiment, the step of decoding and determining comprises identifying an indicator in a header field of the HS-SCCH order indicating that the HS-SCCH order is associated with a group of user equipment, extracting a cyclic redundancy check field from the HS-SCCH order and performing a cyclic redundancy check using an identifier common to the group of user equipment. Accordingly, should the user equipment determine from the header field that the HS-SCCH order is intended for a group of user equipment, then the user equipment may initially perform the cyclic redundancy check using the common identifier, thereby obviating the need to perform a first cyclic redundancy check using its unique H-RNTI.

In one embodiment, the method comprises the step of: sending an acknowledgement to the base station at a time offset dependent upon at least one of a random offset, a fixed offset and an offset derived from the unique identifier. In this way the acknowledgement messages from user equipment may be distributed with time to thereby prevent overload on the base station.

According to a fourth aspect, there is provided user equipment operable to perform a radio interface common reconfiguration in response to a request from a supporting base station, the user equipment comprising: reception logic operable to receive an HS-SCCH order from the base station; decoding logic operable to decode an indication in the HS-SCCH order associating the HS-SCCH order with a group of user equipment; determining logic operable to determine whether the indication matches a group with which the user equipment is associated; and reconfiguration logic operable, in response to an indication from the determining logic that a match occurs, to decode the radio interface common reconfiguration in the HS-SCCH order and to perform the radio interface common reconfiguration.

In one embodiment, the user equipment is in a cell dedicated channel (Cell_DCH) state and the radio interface common reconfiguration comprises at least one of activating at least one carrier, deactivating at least one carrier, changing primary carrier, changing of serving cell, change between normal transmission and discontinuous transmission, and change between normal reception and discontinuous reception.

In one embodiment, decoding logic and determining logic is operable to extract a cyclic redundancy check field from the HS-SCCH order and to perform a cyclic redundancy check using an identifier common to the group of user equipment.

In one embodiment, decoding logic and determining logic is operable identify the indication in a header field of the HS-SCCH order indicating a group of user equipment with which the HS-SCCH order is associated.

In one embodiment, decoding logic and determining logic is operable to identify an indicator in a header field of the HS-SCCH order indicating that the HS-SCCH order is associated with a group of user equipment, to extract a cyclic redundancy check field from the HS-SCCH order and to perform a cyclic redundancy check using an identifier common to the group of user equipment.

In one embodiment, the user equipment comprises transmission logic operable to send an acknowledgement to the base station at a time offset dependent upon at least one of a random offset, a fixed offset and an offset derived from the unique identifier.

According to a fifth aspect, there is provided a computer program product operable, when executed on a computer, to perform the method steps of the first aspect.

According to a sixth aspect, there is provided a computer program product operable, when executed on a computer, to perform the method steps of the third aspect.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates a wireless telecommunications system 10 according to one embodiment;
Figure 2 illustrates the general operation of user equipment when receiving an HS-SCCH order;
Figure 3 illustrates cyclic redundancy checking of an HS-SCCH order; and
Figure 4 illustrates transmission of HS-SCCH orders and HS-DPCCH acknowledgements between a base station and user equipment.

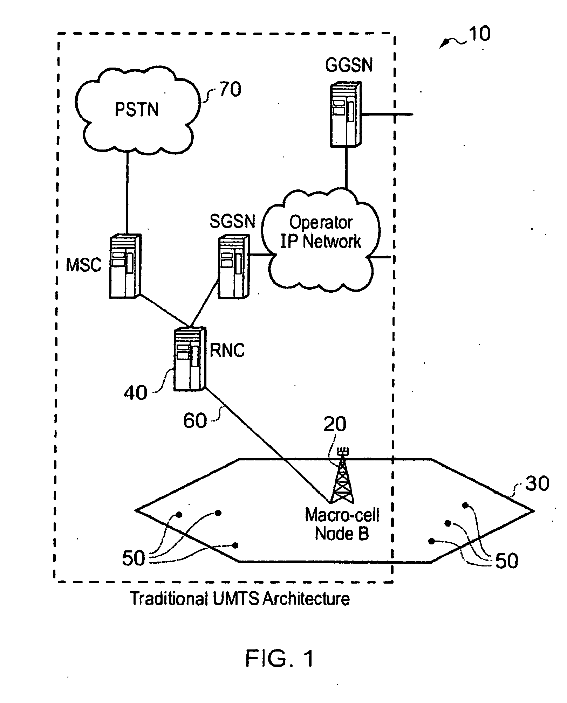

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 40 maintains a neighbour list which includes information about geographical relationships between sectors supported by base stations 20. In addition, the radio network controller 40 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

In Universal Mobile Telecommunications System (UMTS), a Multi-Cell High Speed Downlink Packet Access (MC-HSDPA) arrangement is provided. In MC-HSDPA, a sector is defined as the geographical coverage area of a base station or Node B. A sector can consist of several cells, where each cell aims to cover the same geographical coverage as the sector and uses a separate frequency carrier for its transmission. The frequency carrier can be within the same frequency band or distributed over two frequency bands. MC-HSDPA is an extension to Dual Cell High Speed Downlink Packet Access (DC-HSDPA). In MC-HSDPA, user equipment can receive up to four simultaneous downlink transmissions from four different cells. Hence, MC-HSDPA can potentially double and quadruple the downlink throughput of DC-HSDPA and (Single Cell) HSDPA respectively. MC-HSDPA is also sometimes referred to as 4C-HSDPA (four Cell HSDPA) or 3C-HSDPA when the user equipment receives simultaneous transmissions from four or three cells respectively.

In a multi-carrier system, each carrier will have independent downlink radio links from a base station to user equipment. Those downlink radio links are managed independently since each carrier will likely have different radio propagation paths to user equipment. For HSDPA systems capable of operating in multi-carrier mode, more than two downlink carriers may be provided. It will be appreciated that in a multi-carrier network, the number of downlink carriers may not match the number of uplink carriers. Furthermore, the number of downlink carriers provided may not be exactly double the number of uplink carriers provided. In HSDPA multi-carrier mode, each sector served by a base station can have several carrier frequencies or "carriers" associated therewith. A carrier or cell supported by a carrier covers the same geographical region as a sector. Each cell is served by a different carrier frequency. It will therefore be understood that in a single carrier system, a cell is equivalent to a sector since a sector has only one cell or carrier frequency. Nonetheless, in a multi-carrier network each sector may comprise several cells each cell being served simultaneously by a different carrier frequency.

User equipment can be in Idle mode or in Radio Resource Control (RRC) Connected Mode. Cell_DCH state is one of the states within RRC Connected Mode where user equipment can transmit and receive high data throughput. The MC-HSDPA feature operates in Cell_DCH state, where in this state user equipment and Node B maintain physical layer synchronisations in the uplink and downlink. An HS-DSCH Radio Network Transaction Identifier (H-RNTI) is a unique identifier for user equipment operating in HSDPA and it is unique to each user equipment in Cell_DCH state.

In addition, a secondary H-RNTI is allocated that is common to all or a group of user equipment being supported by the base station. A secondary H-RNTI used in Enhanced Cell_FACH and Cell_PCH states for sending common control signals via HS-DSCH may be utilised for this purpose, this set of secondary H-RNTIs being broadcast in the System Information Broadcast (SIB) 5 and 5bis. Alternatively, a set of secondary H-RNTIs may be specifically allocated by the base station for this purpose. Specifically allocating secondary H-RNTIs provides the base station with more control to limit the size of the groups to reduce the number of concurrent acknowledgement messages being generated by user equipment as will be described in more detail below.

In MC-HSDPA, the primary carrier is the cell that carries essential control channels and it cannot be deactivated. There is only one primary carrier and the other cells are called secondary carriers (e.g. Secondary Carrier 1, Secondary Carrier 2 and Secondary Carrier 3). The user equipment will declare radio link failure if the primary carrier radio link fails, even if the secondary carriers are working perfectly (e.g. if they are lightly loaded or if they have a better radio channel). The secondary carriers provide natural radio link redundancies but these redundancies cannot be utilised.

Control of the carriers can be effected using an HS-SCCH (High Speed Shared Control Channel) order. The HS-SCCH order is layer 1 signalling from the supporting base station to user equipment that allows fast commands/ orders to be made. Apart from deactivation/activation of secondary carriers, HS-SCCH orders can also be used to turn on discontinuous transmission and reception.

Embodiments provide a technique enable fast reconfiguration of a large number of user equipment to occur by utilising a modified HS-SCCH order. For example, there are scenarios where the base station needs to deactivate or activate a large group of use equipment in the cell. For example, it is beneficial if the base station can deactivate a particular secondary carrier for a group or all the user equipment for the purpose of interference control or energy saving. In energy saving, the base station due to low traffic conditions may wish to turn off one of its carriers and therefore deactivate secondary carriers for all user equipment in the cell as will be described in more detail below.

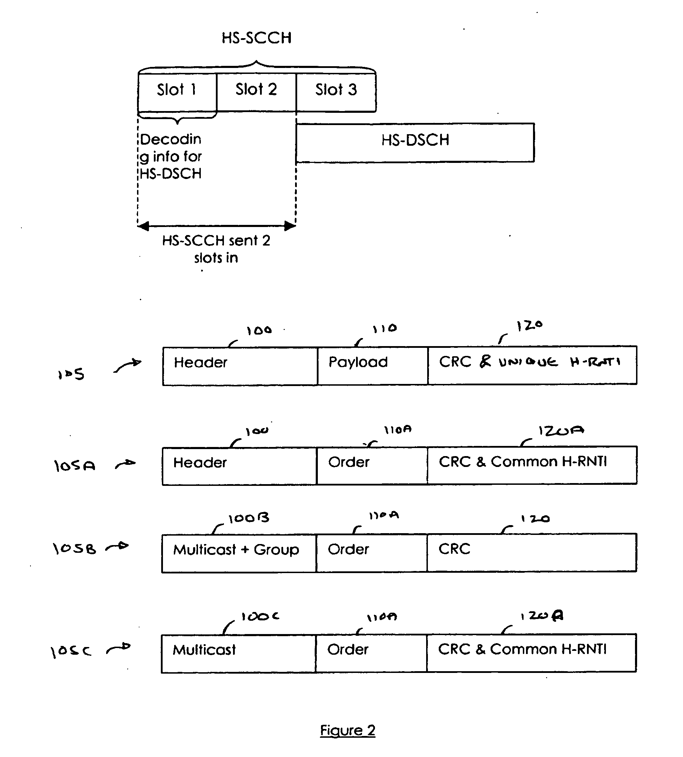

Figure 2 illustrates the general operation of user equipment when receiving an HS-SCCH order. In the example shown in Figure 2, the HS-SCCH order contains information required to decode a corresponding High Speed Downlink Shared Channel (HS-DSCH) or contains an order for the user equipment. When the HS-SCCH order is sent, it is sent two slots in advance, as shown in Figure 2, where the first slot contains the information so that the user equipment can start decoding the HS-DSCH two slots later. This therefore gives one slot (slot 2) for the user equipment to reconfigure itself.

As shown in Figure 2, the HS-SCCH order 105 comprises three main fields (other fields have been omitted to improve clarity). These three main fields are a header field 100, a payload field 110 and a cyclic redundancy check field 120. The cyclic redundancy check is applied to HS-SCCH orders for error detection at the user equipment and is typically masked with the H-RNTI unique to the user equipment in order to ensure that only a cyclic redundancy check performed by that user equipment will pass.

As shown in Figure 2, at least three different modified forms of the HS-SCCH order 105A - 105C may be transmitted by the base station, these modified forms of the HS-SCCH order may be considered to be broadcast or multicast orders since they are intended to be received by more than one user equipment. A similar unicast form of these orders may be utilised for those user equipment that fail to acknowledge the multicast order, as will be described in more detail below.

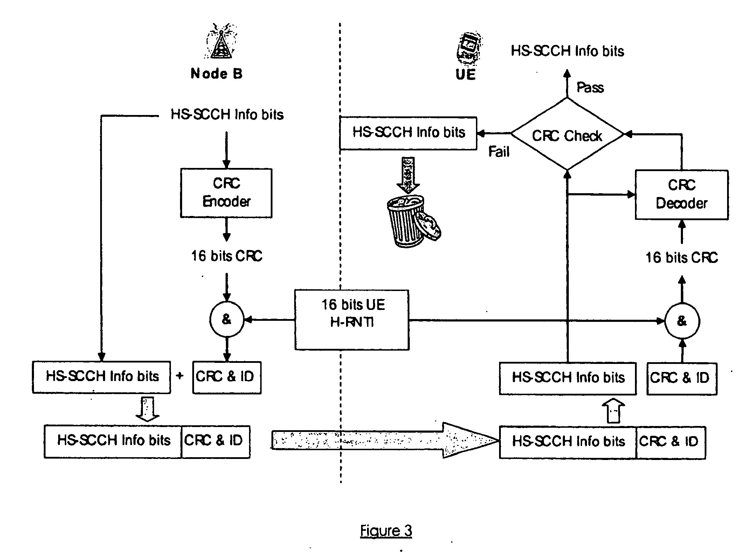

In the first form of HS-SCCH order 105A, a standard header field is utilised 100, together with a six-bit order field 110A which encodes the common reconfiguration to be made by user equipment within a specified group. The cyclic redundancy check field 120A includes a conventional cyclic redundancy check (16 bits) which is then masked with the secondary H-RNTI (16 bits) common to all user equipment within the group as illustrated in Figure 3.

In the second form of HS-SCCH order 105B, the header is a modified header 100B which indicates that the HS-SCCH order is a modified HS-SCCH order intended for receipt by a group of user equipment. The modified header field 100B also includes an indication of the group for which the order is intended. Typically, the group indicator will be an encoded representation of the secondary H-RNTI which is derivable by both the base station and the user equipment from that common H-RNTI. Again, the order is the same as that mentioned above, whilst the cyclic redundancy check is a standard cyclic redundancy check without any H-RNTI masking.

In the third form of HS-SCCH order 105C, a further modified header field 100C is used which indicates that the message is a multicast HS-SCCH order. The order field 110A is identical to the two messages described above, whilst the cyclic redundancy check field 120A includes a cyclic redundancy check masked with the secondary H-RNTI.

Hence with the first form of HS-SCCH order 105A, the user equipment on receipt of the message will perform standard processing on the HS-SCCH order using its unique H-RNTI as illustrated in Figure 3. The masked CRC and H-RNTI are removed from the cyclic redundancy check field 120A and it is (un)masked with the unique H-RNTI to extract the cyclic redundancy check bits. The cyclic redundancy check bits are then decoded for error detection. An error will occur if the HS-SCCH is not intended for the user equipment since a different unique H-RNTI, intended for another user equipment (i.e. the target user equipment), is used to mask the cyclic redundancy check at the base station. It is also possible that the HS-SCCH fails the cyclic redundancy check decoding even if the correct H-RNTI is used due to genuine errors in the HS-SCCH order. The user will discard any HS-SCCH orders that fail the cyclic redundancy check decoding since they contain errors. However, if the cyclic redundancy check fails, rather than simply stopping processing there, the user equipment will then re-perform the cyclic redundancy check using the secondary H-RNTI. If the cyclic redundancy check passes then the user equipment will decode the order field 110A using modified decoding for multicast HS-SCCH orders. It will be appreciated that any appropriate encoding technique may be utilised to encode the required information for reconfiguration of the radio interface mentioned above.

However, it will be appreciated that a problem with the decoding of the first form of HS-SCCH order 105A is that the cyclic redundancy check needs to be performed twice. Accordingly, in the second form of HS-SCCH order 105B, the configuration the header field 100B indicates that the message is a multicast HS-SCCH order and provides an indication of the group that the order is intended for. Assuming that the indication matches the group that the user equipment belongs to, then the user equipment will perform cyclic redundancy checking without using its unique H-RNTI. Assuming the cyclic redundancy check passes, then the user equipment will decode the order field and implement the requested reconfiguration.

Likewise, with the third form of HS-SCCH order 105C, the user equipment is able to derive from the modified header field 100C that the message is a multicast HS-SCCH order and will directly perform its cyclic redundancy check using its secondary H-RNTI. This avoids the need to perform the cyclic redundancy check first using the unique H-RNTI and speeds the process. Assuming the cyclic redundancy check passes, then the user equipment will decode the order field and perform the requested reconfiguration.

The base station will attempt to transmit the HS-SCCH orders 105A - 105C with a sufficiently high power that it will reach all user equipment within the group. The HS-SCCC order can be transmitted with a maximum permissible power or with a power that would reach the user equipment with the poorest radio conditions (i.e. reach the user equipment which is furthest away or which has the greatest level of signal attenuation). The reliability of the HS-SCCH orders 105A - 105C can be further improved by transmitted over all configured carriers. The received HS-SCCH orders from the different carriers can then be soft combined at the base band level in the user equipment. Hence, those user equipment with more than one active carrier will gain extra reliability by receiving the same HS-SCCH order on more than one carrier.

When in the CELL_DCH state, an HS-SCCH order is acknowledged by the user equipment using the High Speed Dedicated Physical Control Channel (HS-DPCCH) feedback channel. Accordingly, an HS-SCCH order sent to a large group of user equipment may trigger a large number of simultaneous transmissions of acknowledgements over the HS-DPCCH). This may cause overload or interference at the base station. Therefore, to reduce the number of acknowledgements received at the base station at any one time, the HS-SCCH orders are broadcast to different groups of user equipment at different times so that the feedback from each group arrives at the base station at different times. The size of each group is selected so that the base station can handle the possible simultaneous acknowledgements from these user equipment and this size is controlled by controlling the allocation of secondary H-RNTIs. Consider an example of a 4C-HSDPA sector that has 40 user equipment with all four carriers active. The carriers are named as C 1, C2, C3 and C4. C1 is the primary carrier and therefore cannot be deactivated. There are four secondary H-RNTIs allocated to restrict the size of each group to no more than ten user equipment. The user equipment dedicated and secondary H-RNTIs are allocated as follows:

| UE | H-RNTI | |
|---|---|---|
| | Dedicated | Secondary |
| 1 to 10 | 1001 to 1010 | 10000 |
| 11 to 20 | 2001 to 2010 | 20000 |
| 21 to 30 | 3001 to 3010 | 30000 |
| 31 to 40 | 4001 to 4010 | 40000 |

Assume now that carriers C1 and C4 are overloaded. The base station decides to deactivate carrier C2 for half of the user equipment and to deactivate carrier C4 for the remaining half of user equipment, as follows:

| UE | Carrier to Deactivate |
|---|---|
| 1 to 10 | C2 |
| 11 to 20 | C2 |
| 21 to 30 | C4 |
| 31 to 40 | C4 |

The base station therefore sends four separate HS-SCCH multicast orders with the following configuration:

| HS-SCCH Order | Carrier to Deactivate | 2nd H-RNTI | Target UEs |
|---|---|---|---|
| HS-SCCH 1 | C2 | 10000 | 1 to 10 |
| HS-SCCH 2 | C2 | 20000 | 11 to 20 |
| HS-SCCH 3 | C4 | 30000 | 21 to 30 |
| HS-SCCH 4 | C4 | 40000 | 31 to 40 |

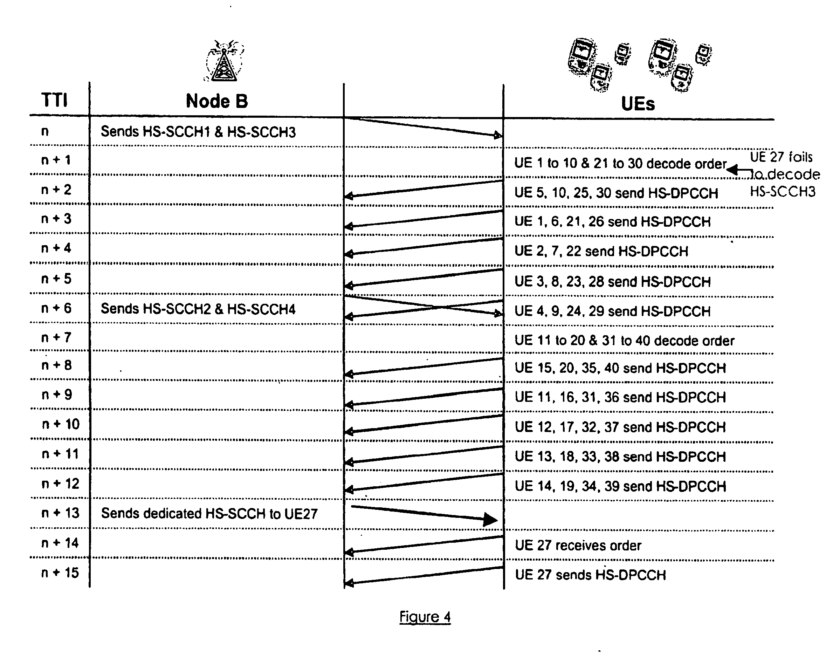

To avoid receiving a large number of simultaneous HS-DPCCH acknowledgement messages, the base station sends HS-SCCH order 1 and HS-SCCH order 3 together and then, after five timed intervals, sends HS-SCCH order 2 and HS-SCCH order 4 together. This is illustrated in more detail in Figure 4.

In order to further reduce the number of simultaneous HS-DPCCH acknowledgement transmissions from the user equipment, each user equipment in the group may send its HS-DPCCH acknowledgement at different times. Accordingly, each user equipment may send its HS-DPCCH acknowledgement based on a random amount, a staggered amount, a predetermined offset amount, or based on the user equipment's identifier.

In one embodiment, the offset is determined based on the dedicated H-RNTI as follows:

$$HS\text{-}DPCCH\_TTI = \text{Dedicated H-RNTI MOD K}$$

where HS-DPCCH_TTI is the amount of delay in transmission time intervals before sending the HS-DPCCH acknowledgement; and K is a number provided by the base station (the larger this number is the longer it will take for all acknowledgements to reach the base station and therefore this number should balance the need to delay receiving all acknowledgements and the number of simultaneous acknowledgements that the base station can handle).

In the example mentioned above, there are two HS-SCCH multi-cast orders sent to 20 user equipment at each attempt. The simultaneous HS-DPCCH acknowledgements from 20 user equipment may still not be tolerable at the base station. To further reduce the number of simultaneous acknowledgements, the HS-DPCCH acknowledgements are sent at different times using the above formula where K = 5. Using this arrangement, the number of transmission time intervals to delay before sending the HS-DPCCH acknowledgements for user equipment 1 to 10 is shown below:

| UE | Dedicated H-RNTI | Number of TTI to Delay |
|----|----|----|
| 1 | 1001 | 1 |
| 2 | 1002 | 2 |
| 3 | 1003 | 3 |
| 4 | 1004 | 4 |
| 5 | 1005 | 0 |
| 6 | 1006 | 1 |
| 7 | 1007 | 2 |
| 8 | 1008 | 3 |
| 9 | 1009 | 4 |
| 10 | 1010 | 0 |

In this example, user equipment 5 and 10 will send the HS-DPCCH acknowledgement immediately, followed by user equipment 1 and 6 at one transmission time interval later. Similar calculations can be performed for other groups of user equipment. In this way, the base station receives only four HS-DPCCH acknowledgements at once, as illustrated in more detail in Figure 4.

Once the user equipment sends the HS-DPCCH acknowledgement, the user equipment can execute the order and reconfigure its radio interface.

The base station will monitor for the acknowledgements from each user equipment. For those user equipment that miss the HS-SCCH multicast order (which is determined by a missing acknowledgement at the base station) the base station can resend a dedicated HS-SCCH order to the specific user equipment (if the number of user equipments failing to acknowledgement is small) or resend the HS-SCCH multicast order (if the number of user equipment who fail to acknowledge is high).

In this example, user equipment 27 failed to decode the HS-SCCH order 3 and, hence, did not receive the order. Since only one user equipment failed to receive the order, the base station sends a dedicated HS-SCCH order to user equipment 27 to deactivate carrier C4. In the second attempt, user equipment 27 receives the order and sends an acknowledgement back via the HS-DPCCH feedback channel.

Accordingly, it can be seen that rather than having to transmit 40 individual HS-SCCH orders to reconfigure the user equipment, only four multicast HS-SCCH orders need be transmitted.

Hence, a technique is provided in which a base station may send an HS-SCCH order to a group of user equipment rather than sending individual orders to each user equipment. This reduces the amount of orders that are needed to reconfigure a group of user equipment. This is particularly useful when a base station needs to activate or deactivate carriers for a group of user equipment for, for example, the purposes of load balancing or energy saving.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method of requesting a radio interface common reconfiguration to be made by each of a group of user equipment (50) from within a plurality of user equipment being supported by a base station (20) in a multi-carrier wireless communications system, the method comprising the steps of:

   determining said radio interface common reconfiguration to be made by each of said group of user equipment;
   encoding said radio interface common reconfiguration in a payload field of a high speed shared control channel, HS-SCCH, order (105; 105A - 105C);
   encoding, in said HS-SCCH order, an indication associating said HS-SCCH order with said group of user equipment; and
   transmitting said HS-SCCH order to said plurality of user equipment being supported by said base station.

2. The method of claim 1, wherein said group of user equipment are in a cell dedicated channel (Cell_DCH) state and said radio interface common reconfiguration comprises at least one of activating at least one carrier, deactivating at least one carrier, changing primary carrier, changing of serving cell, change between normal transmission and discontinuous transmission, and change between normal reception and discontinuous reception.

3. The method of claim 1 or 2, wherein said step of encoding said indication comprises:

   appending a modified cyclic redundancy check field (120) to said HS-SCCH order, said modified cyclic redundancy check field being derived from at least one field of said HS-SCCH order and an identifier common to said group of user equipment.

4. The method of any preceding claim, wherein said step of encoding said indication comprises:

   appending a modified header field (120A) to said HS-SCCH order, said modified header field encoding an identifier common to said group of user equipment.

5. The method of any preceding claim, wherein said step of encoding said indication comprises:

   appending a modified header field (100B) to said HS-SCCH order, said modified header field encoding an indicator that said HS-SCCH order is intended for a group of user equipment.

6. The method of any preceding claim, wherein said step of encoding said indication comprises:

   appending a modified header field (100C) to said HS-SCCH order, said modified header field encoding a group indicator representative of an identifier common to said group of user equipment.

7. The method of any preceding claim, comprising the steps of:

   determining a quantity of user equipment being supported by said base station requiring said rodio interface common reconfiguration and encoding and transmitting a plurality of said HS-SCCH orders, each of said plurality of said HS-SCCH orders being receivable by on associated group of user equipment have a size less than a predetermined maximum.

8. The method of any preceding claim, wherein said step of transmitting comprises:

   at least one of transmitting said HS-SCCH order with a power level set for that User equipment within said group having a lowest signal reception level and transmitting said HS-SCCH order on a plurality of carriers.

9. The method of any preceding claim, comprising the steps of:

monitoring for acknowledgement messages from each of said group of user equipment; and
at least one of retransmitting said HS-SCCH order and transmitting a plurality of HS-SCCH orders, each of said plurality of HS-SCCM orders being encoded for one of said group of user equipment which failed to transmit on acknowledgement message.

10. A base station (20) operable to request a radio interface common reconfiguration to be made by each of a group of user equipment (50) from within a plurality of user equipment being supported by said base station, the base station composing:

determination logic operable to determine sold radio interface common reconfiguration to be made by each of said group of user equipment;
encoding logic operable to encode said radio interface common reconfiguration in a payload field of a HS-SCCH order (105: 105 A-C) and to encode, in said HS-SCCH order, on indication associating said HS-SCCH order with said group of user equipment; and
transmission logic operable to transmit said HS-SCCH order to said plurality of user equipment being supported by said base station.

11. A method of performing a radio interface common reconfiguration in user equipment (50) in response to request from a supporting base station (20), the method comprising the steps of:

receiving an HS-SCCH order (105; 105A-C) from said base station;
decoding an indication in said HS-SCCH order associating said HS-SCCH order with a group of user equipment;
determining whether said indication matches a group with which said user equipment is associated; and
if a match occurs, decoding said radio interface common reconfiguration in said HS-SCCH order and performing said radio interface common reconfiguration.

12. The method of claim 11, wherein said step of decoding and determining comprises extracting a cyclic redundancy check field from said HS-SCCH order and performing a cyclic redundancy check using an identifier common to said group of user equipment.

13. The method of claim 11 or 12, wherein said step of decoding and determining comprises identifying said indication in a header field of said HS-SCCH order indicating a group of user equipment with which said HS-SCCH order is associated.

14. The method of any one of claims 11 to 13, wherein said step of decoding and determining comprises identifying an indicator in a header field of said HS-SCCH order indicating that said HS-SCCH order is associated with a group of user equipment, extracting a cyclic redundancy check field from said HS-SCCH order and performing a cyclic redundancy check using an identifier common to said group of user equipment.

15. User equipment (50) operable to perform a radio interface common reconfiguration in response request from a supporting base station (20), the user equipment comprising:

reception logic operable to receive an HS-SCCH order (105; 105A-C) from said base station:

decoding logic operable to decode an indication in said HS-SCCH order associating said HS-SCCH order with a group of user equipment;
determining logic operable to determine whether said indication matches a group with which said user equipment is associated; and
reconfiguration logic operable, in response to an indication from said determining logic that a match occurs, to decode said radio interface common reconfiguration in said HS-SCCH order and to perform said radio interface common reconfiguration.

**Patentansprüche**

1. Verfahren zum Auffordern eines jeden einer Gruppe von Benutzerendgeräten (50) innerhalb einer Vielzahl von Benutzerendgeräten, die von einer Basisstation (20) in einem drahtlosen Mehrträger-Kommunikationssystem unterstützt werden, eine gemeinsame Funkschnittstellenrekonfiguration durchzuführen, wobei das Verfahren die folgenden Schritte umfasst:

Ermitteln der besagten, von einem jeden der besagten Gruppe von Benutzerendgeräten durchzuführenden gemeinsamen Funkschnittstellenrekonfiguration;
Codieren der besagten gemeinsamen Funkschnittstellenrekonfiguration in einem Nutzdatenfeld eines gemeinsam genutzten Hochgeschwindigkeitssteuerkanal- bzw. HS-SCCH- Befehls (105; 105A - 105C);
Codieren, in dem besagten HS-SCCH-Befehl, einer Angabe, welche den besagten HS-SCCH-Befehl mit der besagten Gruppe von Benutzerendgeräten assoziiert; und
Übertragen des besagten HS-SCCH-Befehls an die Vielzahl von von der besagten Basisstation unterstützten Benutzerendgeräten.

2.  Verfahren nach Anspruch 1, wobei sich die Benutzerendgeräte der besagten Gruppe in einem zelldedizierten Kanal (Cell_DCH) -Zustand befinden und die besagte Funkschnittstellenrekonfiguration mindestens entweder das Aktivieren eines Trägers, das Deaktivieren mindestens eines Trägers, das Wechseln des primären Trägers, das Wechseln der bedienenden Zelle, das Wechseln zwischen normaler Übertragung und diskontinuierlicher Übertragung oder das Wechseln zwischen normalem Empfang und diskontinuierlichem Empfang umfasst.

3.  Verfahren nach Anspruch 1 oder 2, wobei der besagte Schritt des Codierens der besagten Angabe umfasst:

Hinzufügen eines modifizierten Felds für die zyklische Redundanzprüfung (120) zu dem besagten HS-SCCH-Befehl, wobei das besagte modifizierte Feld für die zyklische Redundanzprüfung von mindestens einem Feld des besagten HS-SCCH-Befehls und einer für die besagte Gruppe von Benutzerendgeräten gemeinsamen Kennung abgeleitet wird.

4.  Verfahren nach einem beliebigen der vorstehenden Ansprüche, wobei der besagte Schritt des Codierens der besagten Angabe umfasst:

Hinzufügen eines modifizierten Header-Felds (120A) zu dem besagten HS-SCCH-Befehl, wobei das besagte modifizierte Header-Feld eine für die besagte Gruppe von Benutzerendgeräten gemeinsame Kennung codiert.

5.  Verfahren nach einem beliebigen der vorstehenden Ansprüche, wobei der besagte Schritt des Codierens der besagten Angabe umfasst:

Hinzufügen eines modifizierten Header-Felds (100B) zu dem besagten HS-SCCH-Befehl, wobei das besagte modifizierte Header-Feld einen Indikator dafür, dass der besagte HS-SCCH-Befehl für eine Gruppe von Benutzerendgeräten bestimmt ist, codiert.

6.  Verfahren nach einem beliebigen der vorstehenden Ansprüche, wobei der besagte Schritt des Codierens der besagten Angabe umfasst:

Hinzufügen eines modifizierten Header-Felds (100C) zu dem besagten HS-SCCH-Befehl, wobei das besagte modifizierte Header-Feld einen Gruppenindikator, welcher für eine für die besagte Gruppe von Benutzerendgeräten gemeinsame Kennung repräsentativ ist, codiert.

7.  Verfahren nach einem beliebigen der vorstehenden Ansprüche, die folgenden Schritte umfassend:

Ermitteln einer Menge von von der besagten Basisstation unterstützten Benutzerendgeräten, welche die besagte Funkschnittstellenrekonfiguration erfordern, und Codieren und Übertragen einer Vielzahl der besagten HS-SCCH-Befehle, wobei ein jeder der besagten Vielzahl der besagten HS-SCCH-Befehle, die durch eine assoziierte Gruppe von Benutzerendgeräten empfangen werden können, eine niedrigere Größe als eine vorbestimmte maximale Größe aufweist.

8.  Verfahren nach einem beliebigen der vorstehenden Ansprüche, wobei der besagte Schritt des Übertragens umfasst:

Mindestens entweder das Übertragen des besagten HS-SCCH-Befehls mit einem für dasjenige Benutzerendgerät in der besagten Gruppe, welches einen niedrigsten Signalempfangspegel aufweist, eingestellten Leistungspegel, oder Übertragen des besagten HS-SCCH-Befehls auf einer Vielzahl von Trägern.

9. Verfahren nach einem beliebigen der vorstehenden Ansprüche, die folgenden Schritte umfassend:

Überwachen in Bezug auf Bestätigungsmeldungen von einem jeden der besagten Gruppe von Benutzerendgeräten; und
mindestens entweder Übertragen des besagten HS-SCCH-Befehls oder Übertragen einer Vielzahl von HS-SCCH-Befehlen, wobei ein jeder der besagten Vielzahl von HS-SCCH-Befehlen für eines der besagten Gruppe von Benutzerendgeräten, welches keine Bestätigungsmeldung übertragen hat, codiert wird.

10. Basisstation (20), betreibbar, um ein jedes einer Gruppe von Benutzerendgeräten (50) innerhalb einer Vielzahl von Benutzerendgeräten, die von einer Basisstation unterstützt werden, aufzufordern, eine gemeinsame Funkschnittstellenrekonfiguration durchzuführen, wobei die Basisstation umfasst:

Ermittlungslogik, betreibbar, um die besagte durch ein jedes der besagten Gruppe von Benutzerendgeräten durchzuführende Funkschnittstellenrekonfiguration zu ermitteln;
Codierlogik, betreibbar, um die besagte Funkschnittstellenrekonfiguration in einem Nutzdatenfeld des HS-SCCH-Befehls (105; 105A-C) zu codieren und in dem besagten HS-SCCH-Befehl eine Angabe, welche den besagten HS-SCCH-Befehl mit der besagten Gruppe von Benutzerendgeräten assoziiert, zu codieren; und
Übertragungslogik, betreibbar, um den besagten HS-SCCH-Befehl an die besagte Vielzahl von von der besagten Basisstation unterstützten Benutzerendgeräten zu übertragen.

11. Verfahren zum Durchführen einer Funkschnittstellenrekonfiguration in einem Benutzerendgerät (50) in Reaktion auf die Aufforderung von einer unterstützenden Basisstation (20), wobei das Verfahren die folgenden Schritte umfasst:

Empfangen eines HS-SCCH-Befehls (105: 105A-C) von der besagten Basisstation;
Decodieren einer Angabe in dem besagten HS-SCCH-Befehl, welche den besagten HS-SCCH-Befehl mit einer Gruppe von Benutzerendgeräten assoziiert;
Ermitteln, ob die besagte Angabe einer Gruppe, mit welcher das besagte Benutzerendgerät assoziiert ist, übereinstimmt; und
wenn eine solche Übereinstimmung ermittelt wird, Decodieren der besagten Funkschnittstellenrekonfiguration in dem besagten HS-SCCH-Befehl, und Durchführen der besagten Funkschnittstellenrekonfiguration.

12. Verfahren nach Anspruch 11, wobei der besagte Schritt des Decodierens und des Ermittelns das Extrahieren eines Felds für die zyklische Redundanzprüfung aus dem besagten HS-SCCH-Befehl und das Durchführen der besagten zyklische Redundanzprüfung unter Verwendung einer für die besagte Gruppe von Benutzerendgeräten gemeinsamen Kennung umfasst.

13. Verfahren nach Anspruch 11 oder 12, wobei der besagte Schritt des Decodierens und des Ermittelns das Identifizieren der besagten Angabe in einem Header-Feld des besagten HS-SCCH-Befehls, die eine Gruppe von Benutzerendgeräten, mit welcher der besagte HS-SCCH-Befehl assoziiert ist, angibt, umfasst.

14. Verfahren nach einem beliebigen der Ansprüche 11 bis 13, wobei der besagte Schritt des Decodierens und des Ermittelns das Identifizieren einer Angabe in einem Header-Feld des besagten HS-SCCH-Befehls, welche angibt, dass der besagte HS-SCCH-Befehl mit einer Gruppe von Benutzerendgeräten assoziiert ist, das Extrahieren eines Felds für die zyklische Redundanzprüfung aus dem besagten HS-SCCH-Befehl und das Durchführen einer zyklische Redundanzprüfung unter Verwendung einer für die besagte Gruppe von Benutzerendgeräten gemeinsamen Kennung umfasst.

15. Benutzerendgerät (50), betreibbar für das Durchführen einer Funkschnittstellenrekonfiguration in Reaktion auf die Aufforderung von einer unterstützenden Basisstation (20), wobei das Benutzerendgerät umfasst:

Empfangslogik, betreibbar, um einen HS-SCCH-Befehl (105; 105A-C) von der besagten Basisstation zu empfangen;
Decodierlogik, betreibbar, um eine Angabe in dem besagten HS-SCCH-Befehl, welche den besagten HS-SCCH-Befehl mit einer Gruppe von Benutzerendgeräten assoziiert, zu decodieren;
Ermittlungslogik, betreibbar, um zu ermitteln, ob die besagte Angabe mit einer Gruppe, mit welcher das besagte Benutzerendgerät assoziiert ist, übereinstimmt; und

Rekonfigurationslogik, betreibbar, um in Reaktion auf eine Angabe von der besagten Ermittlungslogik, dass eine Übereinstimmung ermittelt wurde, die besagte Funkschnittstellenrekonfiguration in dem besagten HS-SCCH-Befehl zu decodieren und die besagte Funkschnittstellenrekonfiguration durchzuführen.

**Revendications**

1. Procédé pour exiger qu'une reconfiguration commune d'une interface radioélectrique soit effectuée par chacun d'un groupe d'équipements d'utilisateur (50) au sein duquel une pluralité d'équipements d'utilisateur est prise en charge par une station de base (20) dans un système de communications sans fil à porteuses multiples, le procédé comprenant les étapes suivantes :

   détermination de ladite reconfiguration commune d'interface radioélectrique à effectuer par chacun dudit groupe d'équipements d'utilisateur ;
   codage de ladite reconfiguration commune d'interface radioélectrique dans un champ de charge utile d'un ordre de canal de commande partagé à haut débit, HS-SCCH, (105 ; 105A - 105C) ;
   codage, dans ledit ordre de HS-SCCH, d'une indication associant ledit ordre de HS-SCCH avec ledit groupe d'équipements d'utilisateur ; et
   transmission dudit ordre de HS-SCCH à ladite pluralité d'équipements d'utilisateur qui est prise en charge par ladite station de base.

2. Procédé selon la revendication 1, selon lequel ledit groupe d'équipements d'utilisateur se trouve dans un état de canal dédié de cellule (Cell_DCH) et ladite reconfiguration commune d'interface radioélectrique comprend au moins l'activation d'au moins une porteuse, la désactivation d'au moins une porteuse, le changement de porteuse primaire, le changement de cellule servante, le changement entre une transmission et une transmission discontinue, ou le changement entre une réception normale et une réception discontinue.

3. Procédé selon la revendication 1 ou 2, selon lequel ladite étape de codage de ladite indication comprend :

   ajout d'un champ de contrôle de redondance cyclique modifié (120) audit ordre de HS-SCCH, ledit champ de contrôle de redondance cyclique modifié étant dérivé d'au moins un champ dudit ordre de HS-SCCH et d'un identifiant commun audit groupe d'équipements d'utilisateur.

4. Procédé selon l'une quelconque des revendications précédentes, selon lequel ladite étape de codage de ladite indication comprend :

   ajout d'un champ d'en-tête modifié (120A) audit ordre de HS-SCCH, ledit champ d'en-tête modifié codant un identifiant commun audit groupe d'équipements d'utilisateur.

5. Procédé selon l'une quelconque des revendications précédentes, selon lequel ladite étape de codage de ladite indication comprend :

   ajout d'un champ d'en-tête modifié (100B) audit ordre de HS-SCCH, ledit champ d'en-tête modifié codant un indicateur qui indique que ledit ordre de HS-SCCH est destiné à un groupe d'équipements d'utilisateur.

6. Procédé selon l'une quelconque des revendications précédentes, selon lequel ladite étape de codage de ladite indication comprend :

   ajout d'un champ d'en-tête modifié (100C) audit ordre de HS-SCCH, ledit champ d'en-tête modifié codant un indicateur de groupe représentatif d'un identifiant commun audit groupe d'équipements d'utilisateur.

7. Procédé selon l'une quelconque des revendications précédentes, comprenant les étapes suivantes :

   détermination d'une quantité d'équipements d'utilisateur pris en charge par ladite station de base qui nécessitent ladite reconfiguration commune d'interface radioélectrique, puis codage et transmission d'une pluralité desdits ordres de HS-SCCH, chacun de ladite pluralité desdits ordres de HS-SCCH pouvant être reçu par un groupe associé d'équipement utilisateur ayant une taille inférieure à un maximum prédéterminé.

**8.** Procédé selon l'une quelconque des revendications précédentes, selon lequel ladite étape de transmission comprend :

au moins la transmission dudit ordre de HS-SCCH avec un niveau de puissance réglé pour cet équipement d'utilisateur au sein dudit groupe possédant un niveau de réception de signal le plus bas, ou la transmission dudit ordre de HS-SCCH sur une pluralité de porteuses.

**9.** Procédé selon l'une quelconque des revendications précédentes, comprenant les étapes suivantes :

surveillance des messages de confirmation de réception provenant de chacun desdits groupes d'équipements d'utilisateur ; et
au moins la retransmission dudit ordre de HS-SCCH ou la transmission d'une pluralité d'ordres de HS-SCCH, chacun de ladite pluralité d'ordres de HS-SCCH étant codé pour l'un dudit groupe d'équipements d'utilisateur qui a échoué à transmettre un message de confirmation de réception.

**10.** Station de base (20) pouvant être utilisée pour exiger qu'une reconfiguration commune d'une interface radioélectrique soit effectuée par chacun d'un groupe d'équipements d'utilisateur (50) depuis l'intérieur d'une pluralité d'équipements d'utilisateur prise en charge par ladite station de base, la station de base comprenant :

une logique de détermination pouvant être utilisée pour déterminer ladite reconfiguration commune d'interface radioélectrique à effectuer par chacun dudit groupe d'équipements d'utilisateur ;
une logique de codage pouvant être utilisée pour coder ladite reconfiguration commune d'interface radioélectrique dans un champ de charge utile d'un ordre de HS-SCCH (105; 105A-C) et pour coder, dans ledit ordre de HS-SCCH, une indication associant ledit ordre de HS-SCCH avec ledit groupe d'équipements d'utilisateur ; et
une logique de transmission pouvant être utilisée pour transmettre ledit ordre de HS-SCCH à ladite pluralité d'équipements d'utilisateur qui est prise en charge par ladite station de base.

**11.** Procédé pour effectuer une reconfiguration commune d'une interface radioélectrique dans un équipement d'utilisateur (50) en réponse à la demande de la part d'une station de base (20) le prenant en charge, ledit procédé comprenant les étapes suivantes :

réception d'un ordre de HS-SCCH (105 ; 105A-C) de la part de ladite station de base ;
décodage d'une indication dans ledit ordre de HS-SCCH associant ledit ordre de HS-SCCH avec un groupe d'équipements d'utilisateur ;
détermination si ladite indication correspond à un groupe avec lequel est associé ledit équipement d'utilisateur ; et
si une correspondance a lieu, décodage de ladite reconfiguration commune d'interface radioélectrique dans ledit ordre de HS-SCCH et exécution de ladite reconfiguration commune d'interface radioélectrique.

**12.** Procédé selon la revendication 11, selon lequel ladite étape de décodage et de détermination comprend l'extraction d'un champ de contrôle de redondance cyclique dudit ordre de HS-SCCH et l'exécution d'un contrôle de redondance cyclique en utilisant un identifiant commun audit groupe d'équipements d'utilisateur.

**13.** Procédé selon la revendication 11 ou 12, selon lequel ladite étape de décodage et de détermination comprend l'identification de ladite indication dans un champ d'en-tête dudit ordre de HS-SCCH indiquant un groupe d'équipements d'utilisateur auquel est associé ledit ordre de HS-SCCH.

**14.** Procédé selon l'une quelconque des revendications 11 à 13, selon lequel ladite étape de décodage et de détermination comprend l'identification d'un indicateur dans un champ d'en-tête dudit ordre de HS-SCCH indiquant que ordre de HS-SCCH est associé à un groupe d'équipements d'utilisateur, l'extraction d'un champ de contrôle de redondance cyclique dudit ordre de HS-SCCH et l'exécution d'un contrôle de redondance cyclique en utilisant un identifiant commun audit groupe d'équipements d'utilisateur.

**15.** Équipement d'utilisateur (50) pouvant être utilisé pour effectuer une reconfiguration commune d'une interface radioélectrique en réponse à une demande de la part d'une station de base (20) le prenant en charge, l'équipement d'utilisateur comprenant :

une logique de réception pouvant être utilisée pour recevoir un ordre de HS-SCCH (105 ; 105A-C) de la part de ladite station de base ;

une logique de décodage pouvant être utilisée pour décoder une indication dans ledit ordre de HS-SCCH associant ledit ordre de HS-SCCH avec un groupe d'équipements d'utilisateur ;

une logique de détermination pouvant être utilisée pour déterminer si ladite indication correspond à un groupe avec lequel est associé ledit équipement d'utilisateur ; et

une logique de reconfiguration pouvant être utilisée, en réponse à une indication de la partie de ladite logique de détermination qu'une correspondance a lieu, pour décoder ladite reconfiguration commune d'interface radioélectrique dans ledit ordre de HS-SCCH et pour exécuter ladite reconfiguration commune d'interface radioélectrique.

~10

GGSN

PSTN 70

SGSN

Operator
IP Network

MSC

RNC

40

60

20

30

Macro-cell
Node B

50

50

Traditional UMTS Architecture

FIG. 1

HS-SCCH

| Slot 1 | Slot 2 | Slot 3 |
|--------|--------|--------|

Decoding info for HS-DSCH

HS-DSCH

HS-SCCH sent 2 slots in

100     110     120

105

| Header | Payload | CRC & UNIQUE H-RNTI |
|--------|---------|---------------------|

100     110A     120A

105A

| Header | Order | CRC & Common H-RNTI |
|--------|-------|---------------------|

100B     110A     120

105B

| Multicast + Group | Order | CRC |
|-------------------|-------|-----|

100C     110A     120A

105C

| Multicast | Order | CRC & Common H-RNTI |
|-----------|-------|---------------------|

Figure 2

**Node B**

HS-SCCH Info bits

CRC
Encoder

16 bits CRC

&

HS-SCCH Info bits + CRC & ID

HS-SCCH Info bits | CRC & ID

16 bits UE
H-RNTI

**UE**

HS-SCCH Info bits

HS-SCCH Info bits ← CRC Check

Pass

Fail

CRC
Decoder

16 bits CRC

&

HS-SCCH Info bits

CRC & ID

HS-SCCH Info bits | CRC & ID

Figure 3

Figure 4

**EP 2 398 177 B1**

## REFERENCES CITED IN THE DESCRIPTION

**Patent documents cited in the description**

- EP 2151943 A2
- US 20100112974 A
- US 20080267061 A